# EUROPEAN PATENT SPECIFICATION

(11) **EP 2 067 246 B1**
(45) Date of publication and mention of the grant of the patent: **27.04.2011**
(21) Application number: 07804367.6
(22) Date of filing: 24.09.2007
(51) Int. Cl.: H02M 7/02

(54) **POWER CONVERTER**
STROMUMSETZER
CONVERTISSEUR DE SECTEUR

(30) Priority: 22.09.2006 GB 0618839
(43) Date of publication of application: 10.06.2009
(73) Proprietor: Supply Design Ltd, Dunfermline, Fife KY12 7HU (GB)
(72) Inventor: BRITTON, Craig, Alexander, Fife KY12 7HU (GB)
(74) Representative: Ainscow, Georgina Frances
(86) International application number: PCT/GB2007/003614
(87) International publication number: WO 2008/035106

(56) References cited:
- EP-B1- 0 860 048
- DE-A1- 19 848 540
- JP-A- 5 137 077

## Description

The present invention relates to a power converter, and in particular to a power converter for converting three-phase AC (alternating current) to DC (direct current).

It is well understood that many applications require the conversion of three-phase AC power to a DC output. Such applications include radar and radio frequency transmitters and repeaters, military and avionic power supplies, particularly those driven by variable frequency alternators, renewable energy generators, for example where conditioning of the variable voltage and frequency output from wind or water driven turbines is required, industrial power supplies, telecommunications power supplies, air conditioning, and servo amplifier supplies.

Three-phase AC to low voltage DC converters for aerospace and military applications must comply with standard requirements such as those set out in MIL-STD-1399 "Interface Standard for Shipboard System", which sets conditions under which equipment may connect to shipboard power sources. These requirements include operation at 400Hz AC or above, a high power factor, low values for the first 50 current harmonics above the AC line frequency, tolerance to wide variations in line voltage and frequency (often 3 to 1 between the minimum and maximum values), low EMI (electromagnetic interference) emissions, low size and weight, and galvanic isolation.

Outside aerospace and military applications, other requirements may apply, depending on the particular application. However, the ability to work effectively at frequencies of 400Hz AC or above, low harmonic content, high power factor, and low size and weight are universally desirable for reasons of efficiency and cost.

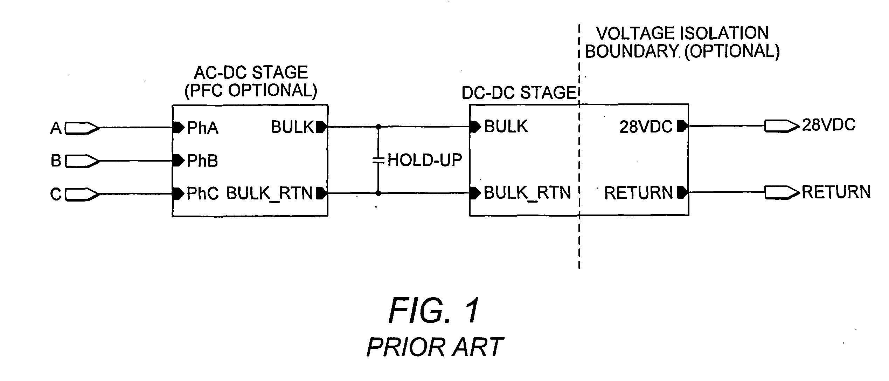

Various standard three-phase AC to DC power converters are available. For example, figure 1 is a circuit diagram for a typical two-stage three-phase AC to 28V DC converter. Unregulated, passive solutions for the AC to DC stage can take many forms, the simplest being full wave diode rectification of the input voltages. This scheme is tolerant to wide variations in frequency and voltage, but delivers a poor power factor, high harmonic content and no isolation.

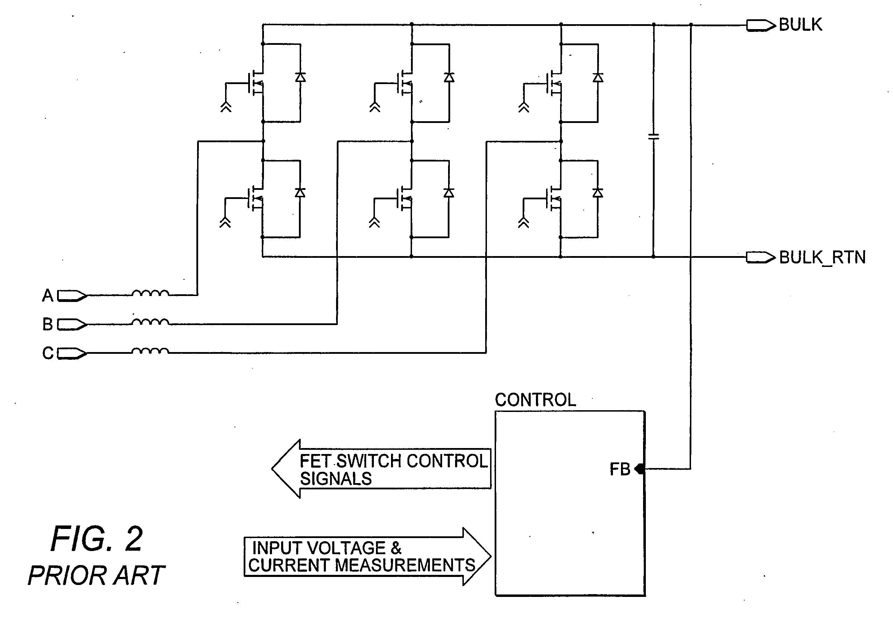

Figure 2 is a circuit diagram for a bi-directional boost derived power factor corrector. This solution achieves a low size and weight, high power factor, low harmonic content and a regulated output voltage. However, this is achieved at the expense of no galvanic isolation, poor performance at higher line frequencies and significant control complexity. In this respect, performance is based on the active and independent pulse width modulation of six MOSFET switches. Acceptable performance at AC line frequencies above about 100Hz requires the switching frequency to be increased beyond the optimal operating points of currently available components. Moreover, optimal control requires a DSP (digital signal processor) or micro-processor based control scheme, which would require a complicated DSP, FPGA (field programmable gate array) or micro-processor based solution. This complexity results in increased cost and increased failure rates.

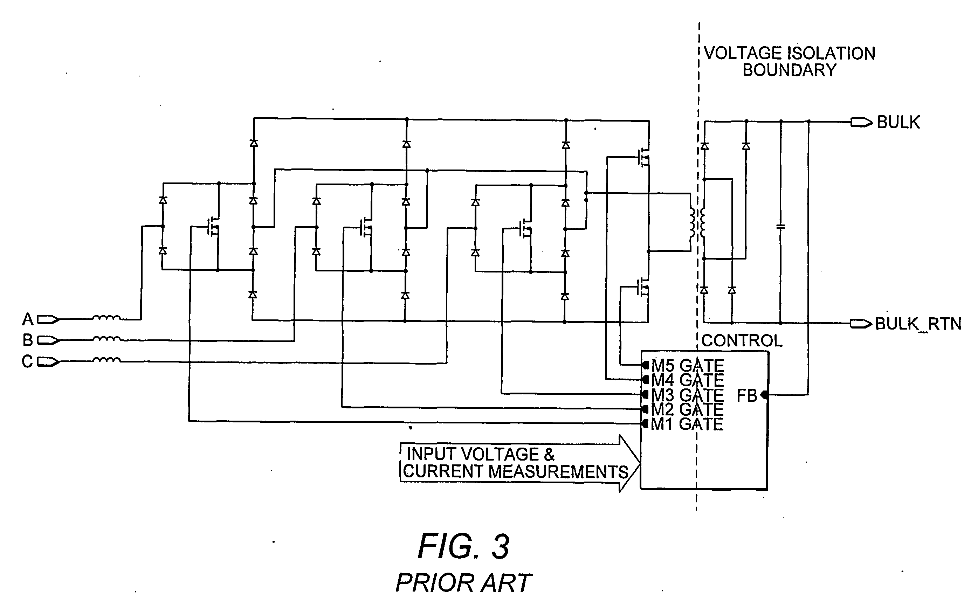

Figure 3 is a circuit diagram for a so-called Vienna Rectifier based power factor corrector with a transformer isolated output. This solution achieves a low size and weight, high power factor, low harmonic content, a regulated output voltage and a reduced number of switching elements and diode reset losses as compared to the bi-directional boost configuration of figure 2. However, this device exhibits poor performance at higher AC frequencies, since the solution is based on independent pulse width modulation of three MOSFET switches and acceptable performance at AC line frequencies above about 100Hz requires the switching frequency to be increased beyond the optimal operating points of currently available components. There is also significant control complexity, requiring a complicated DSP, FPGA or micro-processor based solution.

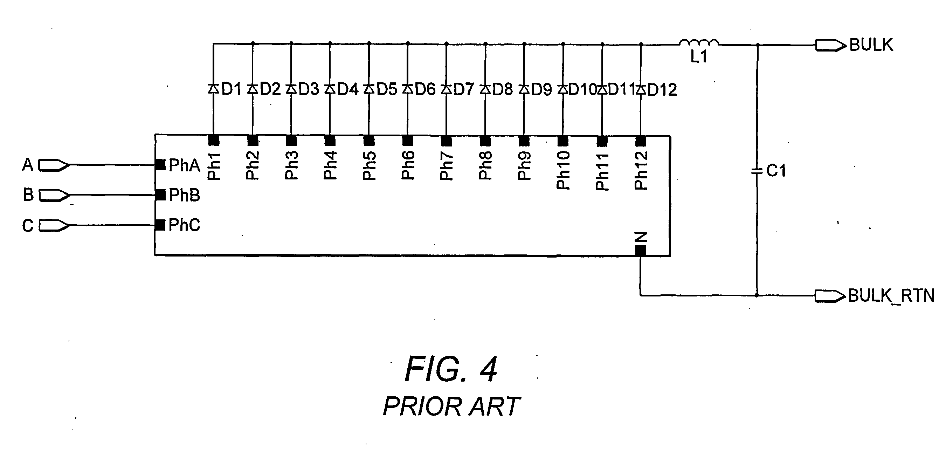

Figure 4 is a circuit diagram for a multi-phase line frequency transformer (multi-phase, phase-shifted rectifier) which works by combining components of the phase to phase supply voltages to provide twelve phase-shifted outputs. Such power converters achieve good harmonic performance and a high power factor. Moreover, they allow operation at 400Hz and above, which represents a significant improvement over the devices described above. However, these devices have significant size and weight due to the low operating frequency of the magnetic core and the complexity of the secondary windings required.

It is an object of the present invention to overcome the drawbacks associated with the prior art.

According to the present invention there is provided a power converter for converting a three-phase AC supply to a DC output, the power converter comprising:-
first selecting means for selecting one of the highest, the second highest or the lowest instantaneous phase to phase voltages of the three-phase supply to provide a first power rail;
second selecting means for selecting a different one of the highest, the second highest or the lowest instantaneous phase to phase voltages of the three-phase supply to provide a second power rail;
first and second transformers coupled to the respective first and second power rails; and
combining means for combining the outputs of said first and second transformers to provide the DC output.

By actively selecting one of the highest, second highest or lowest instantaneous phase to phase voltages of the three-phase supply to provide the first power rail, and selecting a different one of the highest, second highest or lowest instantaneous phase to phase voltages to provide the second power rail, the present invention exploits the rotational symmetry of the three-phase supply to allow for a reduction in transformer winding complexity over known passive multi-phase line frequency transformers such as that shown in figure 4 and described in more detail below. As a result, the size, weight and cost of the converter is significantly reduced, whilst maintaining the good harmonic performance and high power factor achieved by known multi-phase line frequency transformers, as well as maintaining the ability to work at frequencies of 400Hz and above.

Power factor correction and harmonic reduction are achieved by the present invention whilst providing a DC current (averaged over either switching or AC cycles) to the output load.

Further, with the present invention, the magnetic elements can be operated at high frequency so that the large and heavy laminated iron cores required for known multi-phase line frequency transformers can be replaced by smaller ferrite parts, giving a further reduction in the size, weight and cost of the converter.

With the present invention, the output current and transformer duty ratio do not need to be adjusted between switching cycles in order to shape the input waveform. This means that the load converter used with the present invention can be based on standard DC to DC topologies, standard control ICs (integrated circuits) and standard control schemes. This represents a significant reduction in control complexity over prior art converters.

Further, since standard DC to DC converter control schemes may be used for the load converter, standard DC to DC converter paralleling and redundancy solutions may be applied. Such solutions may include load share busses, diode mixing and converter hot swapping.

Moreover, unlike previously known high frequency solutions in which the input phase currents must be individually measured as part of the control scheme, measurement of the input phase currents is not required with the present invention.

Control means may be provided for controlling the switching duty cycle of the first and second transformers.

Wide tolerance to input frequency variations is achieved with the present invention because the switching duty cycle of the transformers does not need to be adjusted in order to improve power factor or reduce input harmonics. Only the first and second selecting means (which select the voltage to be provided to the first and second power rails) need to increase in speed in accordance with the line frequency.

The switching frequency of the transformers does not directly affect input harmonic performance. In prior art designs using boost based converters, 50 PWM (pulse width modulated) controlled switching cycles per input AC half cycle are often required to give acceptable performance. For a line frequency of 400Hz AC, this dictates a switching frequency of around 400kHz. Power loss due to output diode recovery time becomes very significant at this frequency.

In contrast, with the present invention, the high power factor is a direct result of the construction of the converter itself, and is not affected by the switching frequency of the transformers. As a result, a switching speed of, for example, 50 or 100kHz, can provide power factor correction for a 400Hz or faster input.

The present invention also allows for single stage AC to DC conversion, thereby reducing the cost, complexity and size of the device whilst increasing reliability.

Further, the output voltage may be either above or below the input voltage.

In the specification, the phrase "highest instantaneous phase to phase voltage" refers to the highest phase to phase voltage at any point in time, and the terms "second highest instantaneous phase to phase voltage" and "lowest instantaneous phase to phase voltage" should be interpreted accordingly. Since the highest (and accordingly the second highest and lowest) phase to phase voltage changes over the course of an AC cycle, the phase to phase voltage provided to the first and second power rails will also change over the AC cycle, such that the voltage provided to the respective power rail is always the highest (or the second highest or the lowest, as appropriate) of the three phase to phase voltages at that time.

In the specification, the term "power converter" means a rectifier, power factor corrector, or other device for converting power from one form to another.

The combining means preferably comprises one or more pairs of secondary windings, each pair of secondary windings comprising a secondary winding of said first transformer connected in series with a secondary winding of said second transformer.

Thus, the current flowing through each pair of secondary windings is forced to be equal, which in turn constrains the loads of the first and second power rails. In cases where the primary windings of the first and second transformers have an equal number of turns, the loads of the first and second power rails would be constrained in a ratio corresponding to the turns ratio of each pair of secondary windings.

The turns ratios of the primary and secondary windings of the first and second transformers are preferably selected to yield a phase step of substantially 360°/(12 x N), where N is the number of pairs of secondary windings. This will achieve a (12 x N)-step load profile.

In a preferred embodiment, the combining means comprises one pair of secondary windings.

In this case, the turns ratio of the primary winding of the second transformer to the secondary winding thereof is preferably substantially 0.366 times the turns ratio of the primary winding of the first transformer to the secondary winding thereof, where 0.366 is the ideal current ratio of the first and second power rails at 15°. This is equal to the ideal ratio at 45°, 75°, ... 345.

This ratio is thus repeated 12 times during an AC-cycle, resulting in a 12-step load profile.

In another preferred embodiment, the combining means further comprises first and second pairs of secondary windings.

In this case, the turns ratio of the primary winding of the second transformer to the first secondary winding thereof is preferably substantially 0.164 times the turns ratio of the primary winding of the first transformer to the first secondary winding thereof, where 0.164 is the ideal current ratio of the first and second power rails at 7.5°. This is equal to the ideal ratio at 37.5°, 67.5°, .... 337.5°. The turns ratio of the primary winding of the second transformer to the second secondary winding thereof is preferably substantially 0.629 times the turns ratio of the primary winding of the first transformer to the second secondary winding thereof, where 0.629 is the ideal current ratio of the first and second power rails at 22.5 °. This is equal to the ideal ratio at 52.5°, 82.5°, ..., 352.5 °.

Each of these two ideal ratios is repeated 12 times during an AC-cycle, resulting in a 24-step load profile.

In yet another preferred embodiment, the combining means comprises first, second and third pairs of secondary windings.

In this case, the turns ratio of the primary winding of the second transformer to the first secondary winding thereof is preferably substantially 0.106 times the turns ratio of the primary winding of the first transformer to the first secondary winding thereof, where 0.106 is the ideal current ratio of the first and second power rails at 5°. This is equal to the ideal ratio at 35°, 65°, ..., 335°. The turns ratio of the primary winding of the second transformer to the second secondary winding thereof is preferably substantially 0.366 times the turns ratio of the primary winding of the first transformer to the second secondary winding thereof, where 0.366 is the ideal current ratio of the first and second power rails at 15°. This is equal to the ideal ratio at 45 °, 75°, ... 345°. The turns ratio of the primary winding of the second transformer to the third secondary winding thereof is preferably substantially 0.737 times the turns ratio of the primary winding of the first transformer to the third secondary winding thereof, where 0.737 is the ideal current ratio of the first and second power rails at 25°. This is equal to the ideal ratio at 55°, 85°, ... 355°.

Each of these three ideal ratios is repeated 12 times during an AC-cycle, resulting in a 36-step load profile.

In yet another embodiment, the combining means may comprise first, second, third and fourth pairs of secondary windings.

In this case, the turns ratio of the primary winding of the second transformer to the first secondary winding thereof is preferably substantially 0.079 times the turns ratio of the primary winding of the first transformer to the first secondary winding thereof, where 0.079 is the ideal current ratio of the first and second power rails at 3.75°. The turns ratio of the primary winding of the second transformer to the second secondary winding thereof is preferably substantially 0.259 times the turns ratio of the primary winding of the first transformer to the second secondary winding thereof, where 0.259 is the ideal current ratio of the first and second power rails at 11.25 °. The turns ratio of the primary winding of the second transformer to the third secondary winding thereof is preferably substantially 0.488 times the turns ratio of the primary winding of the first transformer to the third secondary winding thereof, where 0.488 is the ideal current ratio of the first and second power rails at 18.75°. The turns ratio of the primary winding of the second transformer to the fourth secondary winding thereof is preferably substantially 0.796 times the turns ratio of the primary winding of the first transformer to the fourth secondary winding thereof, where 0.796 is the ideal current ratio of the first and second power rails at 26.25°.

Each of these four ideal ratios is repeated 12 times during an AC-cycle, resulting in a 48-step load profile.

In cases where the power converter comprises more than one pair of secondary windings, the power converter preferably further comprises third selecting means for selecting the highest instantaneous voltage output by the pairs of secondary windings as the DC output.

Preferably, the first selecting means is for selecting the highest instantaneous phase to phase voltage to provide the first power rail.

Preferably, the second selecting means is for selecting the second highest instantaneous phase to phase voltage to provide the second power rail.

The first selecting means preferably comprises a full wave rectifier.

The second selecting means also preferably comprises a full wave rectifier.

Further preferably, the second selecting means comprises a plurality of switches for selecting said different one of the highest, the second highest or the lowest instantaneous phase to phase voltages of the three-phase supply.

The second selecting means preferably comprises a switch control circuit for controlling said switches.

The power converter preferably further comprises regulating means for regulating the DC output.

In contrast to known switched mode power factor correction circuits, with the present invention, this can be achieved using standard DC to DC PWM control methods. For example, using a standard DC to DC PWM control chip such as the Texas Instruments UCC2895D or UCC2800D. Regulation allows for improved utilization of the bulk capacitance (output hold-up capacitance) and for optimisation of downstream DC to DC converters.

The regulating means preferably comprises a switched mode control block for controlling the switching duty cycles of the first and second transformers. In this case an output filter may also be provided. The output filter may comprise at least one capacitor and at least one inductor.

The switched mode control block allows for controlling the switch duty for buck based loads.

In cases where voltage regulation is not required, the power converter may comprise a clock generator for switching the first and second transformers with a fixed equal duty cycle.

The power converter may comprise a boost pulse width modulator control block configured as the secondary side load. With a double ended converter running at 100% duty, this would enable the power converter to draw continuous current from the first and second power rails. In practice, with this implementation of the present invention, transformer FETs are switched with as close to 50% duty as possible. Each FET is therefore on for as close to half of the switching cycle as possible.

The power converter preferably further comprises galvanic (or safety) isolation between a primary side of the power converter and a secondary side of the power converter.

In cases where isolation between the primary and secondary side circuits is not required, one of said first and second transformers may be an auto-transformer. This allows for a further reduction in the overall size of the device.

The power converter may be a single ended buck (forward) converter.

The power converter may be configured as a double ended buck converter. Examples of double ended buck converters include push-pull, half-bridge and full-abridge converters.

The power converter may be a boost based load converter as claimed in any preceding claim.

Embodiments of the present invention will now be described with reference to the accompanying drawings in which:-

Figure 1 is a circuit diagram for a previously known two-stage three-phase AC to 28V DC converter;

Figure 2 is a circuit diagram for a previously known bi-directional boost derived power factor corrector;

Figure 3 is a circuit diagram for a previously known Vienna Rectifier based power factor corrector;

Figure 4 is a circuit diagram for a known 12-phase line frequency transformer;

Figure 5 illustrates the phase relationship between the input and output voltages for the line frequency transformer of figure 4;

Figure 6 illustrates the coupling of currents for the line frequency transformer of figure 4;

Figure 7 illustrates a possible secondary winding construction for a 24-phase line frequency transformer;

Figure 8 illustrates a possible secondary winding construction for a 36-phase line frequency transformer;

Figure 9 is a simplified circuit diagram which illustrates the principles of the present invention;

Figures 10a and 10b are graphs which illustrate the normalized voltages output by rail I and rail 2 in the circuit of figure 9, as compared with the three-phase supply voltages;

Figure 11 is a graph which illustrates the 12-step voltage and current waveforms (ideal currents averaged over a switching cycle) for the embodiment of figure 9;

Figure 12 is a circuit diagram for an alternative secondary-side circuit to that shown in figure 9, which yields a 24-step output;

Figure 13 shows a further alternative secondary-side circuit to that shown in figure 9, which yields a 36-step output;

Figure 14 shows a further alternative secondary-side circuit to that shown in figure 9, which yields a 48-step output;

Figure 15 is a graph which illustrates the 36-step voltage and current waveforms (ideal currents averaged over a switching cycle) for the 36-phase embodiment of figure 13;

Figure 16 is a graph which illustrates the normalised voltage amplitudes for the three pairs of secondary windings of the 36-phase embodiment of figure 13;

Figure 17 is a circuit diagram for a single ended load converter (forward converter configuration) which embodies the present invention;

Figure 18 is a circuit diagram for a single ended load converter (flyback converter configuration) which embodies the present invention;

Figure 19 is a circuit diagram for a double ended load converter (half bridge configuration) which embodies the present invention;

Figure 20 is a circuit diagram for a fixed duty converter without load regulation which embodies the present invention;

Figure 21 is a double ended converter with boost load which embodies the present invention.

In the figures, components which are common to different embodiments are given common reference numerals.

Figure 4 is a circuit diagram for a known multi-phase line frequency transformer with twelve phase-shifted outputs. The three supply voltages A, B, C of a three-phase power supply (not shown) are connected to respective inputs PhA, PhB and PhC of a three limb integrated magnetic. Using output windings with appropriate turns ratios magnetically coupled to the input windings of the integrated magnetic, scaled components of the three input voltages are combined to produce twelve phase-shifted output voltages at outputs Ph1 to Ph12.

The output voltages are diode ORed by diodes D1 to D 12 so that, at any time, only the highest instantaneous output voltage delivers power to the load. An AC filter comprising inductor L1 and capacitor C1 provides current smoothing and energy storage at the output.

Various possible winding configurations are possible to achieve twelve phase-shifted outputs from a three-phase input.

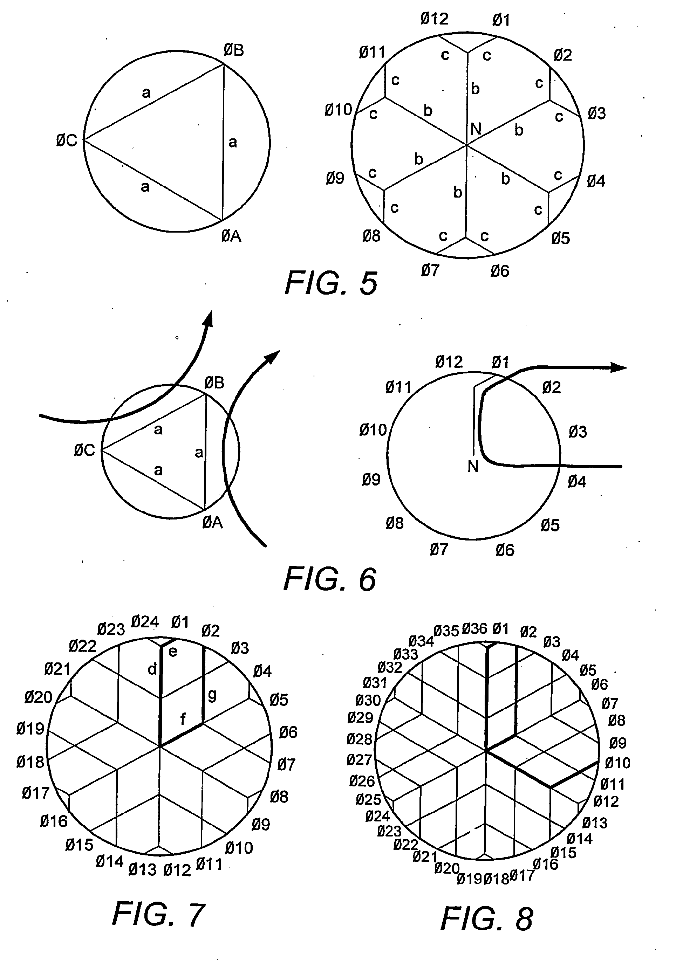

Figure 5 illustrates the transformer winding scheme for one such configuration. Each straight line represents a transformer winding. Parallel lines represent windings which are closely magnetically coupled. The length of the line, denoted by *a*, *b* or *c*, is proportional to the number of turns of the winding. Thus, the input windings all have a number of turns represented by a whilst the output windings have a number of turns represented by b or a number of turns represented by c. For all windings, the start point (dot end) is assumed to be the uppermost end on the diagram.

As can be seen from figure 5, with the particular configuration shown, output ø1N is obtained by summing components of øAB and øAC in the ratio *b*:*c*, output ø2N is obtained by summing components of øAC and øAB in the same ratio, and so on to obtain outputs ø3N, ø4N, ..., ø12N.

To achieve this, *b* and *c*-turn output windings are closely magnetically coupled to each of the three input windings corresponding to øAB, øAC and øBC. When ø1 is loaded, identical currents pass through the *b*-turn output winding coupled to øAB and the c-turn output winding coupled to øAC. Then, by transformation of current, the ratio of input currents is forced to match the ratio of the output turns, i.e., *b:c* (see figure 6). Similarly, when ø2 is loaded, identical currents pass through the *b*-turn output winding coupled to øAC and the *c*-turn output winding coupled to øAB. Figure 5 illustrates how the pattern continues for ø3, ø4, ..., ø12.

Accordingly, during the ø1 conduction period, øAB has the largest magnitude and øAC the second largest. During the ø2 conduction period, øAC has the largest magnitude and øAB the second largest. In general, for every output's conduction period, a *b*-turn winding is coupled to the highest input phase to phase voltage and a c-turn winding to the next highest.

By extending the principles of the 12-phase line frequency transformer outlined above, 24-phase and 36-phase line frequency transformers are possible, as illustrated by figures 7 and 8 respectively. The 24-phase configuration requires two ratios: *a:d:e* and *a:f:g,* and thus requires four sets of output windings, having respectively *d*, *e, f* and *g* turns. The 36-phase transformer requires three ratios, and thus requires six sets of output windings. In principle, the pattern may continue in steps of twelve phases for designs of even higher order, although, in practice, the implementation of such higher order configurations becomes impractical.

The line frequency transformers described above can be used to achieve compliance with MIL-STD-1399 in terms of power factor and harmonic performance. However, the complexity of the transformer windings and the line frequency operation of the magnetic core mean that such devices have significant size and weight, and are costly to manufacture.

Moreover, the operation frequency of the device is dependent on the line frequency of the input AC. For most applications this ranges between 50 and 400 Hz.

The present invention is a development of the above described multi-phase line frequency transformers, which exploits the observed rotational symmetry of the three-phase supply to achieve a significant reduction in transformer winding complexity, and thus a significant reduction in the overall size, weight and cost of the transformer, whilst maintaining the improved power factor and harmonic performance obtained with previously known multi-phase line frequency transformers. Moreover, with the present invention, high frequency switched mode operation becomes possible, enabling the size of the magnetic core to be reduced. A switched mode solution will typically operate at 50 to 400kHz, which represents a frequency multiplier of a 1000 over the line frequency devices described above.

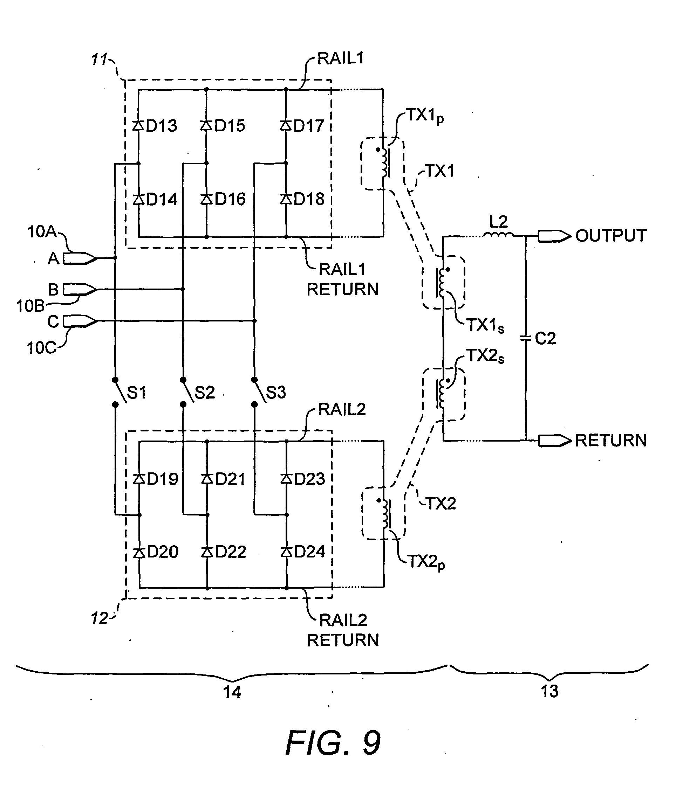

Figure 9 is a simplified circuit diagram illustrating the principles of the present invention. The three supply voltages A, B, C of a delta connected three-phase system (not shown) are connected to inputs 10A, 10B, 10C. Each of the inputs 10A, 10B, 10C is connected between a respective pair of series connected diodes D13 and D14, D15 and D16, D17 and D18. The three pairs of series connected diodes are connected in parallel across rail 1 and its return. This first set of six diodes D13 to D18 forms a full wave rectifier 11 which acts to select whichever of the three available phase to phase supply voltages is the highest at any time as the output voltage of rail 1.

For rail 2, the three inputs 10A, 10B, 10C are additionally connected via respective switches S1, S2, S3 to a second set of six diodes D 19 to D24 which are arranged in an identical manner to the first set of diodes D13 to D18 to form a second full wave rectifier 12. In use, the switches S1, S2, S3 are controlled by a switching circuit (not shown in figure 9) to remove the highest and lowest instantaneous voltages (by disconnecting the appropriate input phase) and thereby select the second highest of the three available phase to phase supply voltages at any time. The second full wave rectifier 12 then acts to rectify the selected phase to phase voltage to provide the output voltage of rail 2.

It will thus be appreciated that the voltage across rail 1 will always be equal to the highest instantaneous voltage of the three-phase supply, whilst the voltage across rail 2 will always be equivalent to the second-highest instantaneous voltage of the three-phase supply.

The current draw from the remaining (lowest) phase to phase voltage will be equal to the difference in currents drawn from rail 1 and rail 2. Controlling the current from rail 1 and rail 2 therefore controls the current draw from all three input phases.

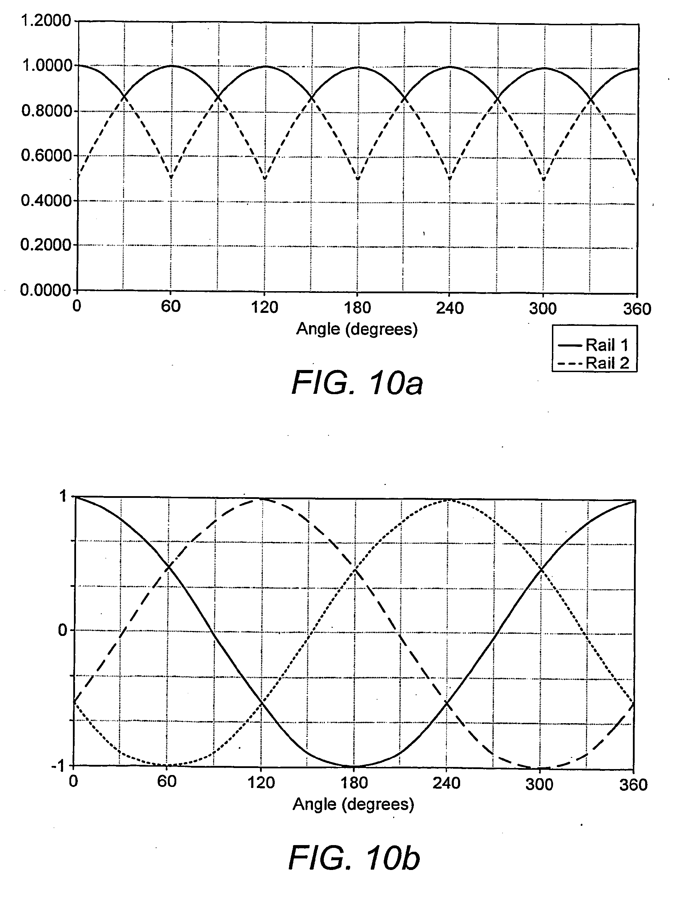

Figures 10a and 10b illustrate the normalized voltages output by rail 1 and rail 2 in the circuit shown in figure 9 (figure 10a), as compared with the three phase to phase supply voltages input to the system from the three-phase supply (figure 10b). From figure 10a, it can be seen that the full wave rectification provided by diodes D13 to D24 ensures that during an AC input cycle the voltages of both rail 1 and rail 2 rise and fall six times, with mirror symmetry about the peaks and troughs. For an ideal power factor, the current flowing in to or out of a supply phase should be proportional to the sum of instantaneous voltages between the said phase and the two other input phases. Therefore at 0° the current drawn from rail 2 should be 0, at 15° it should be 0.366 times that drawn from rail 1, and at 30° it should be equal to that drawn by rail 1. As a result, other than at the peaks and troughs, specific ideal ratios of rail 1 to rail 2 currents are each repeated 12 times for each AC cycle.

Returning to figure 9, rails 1 and 2 each supply a respective transformer TX1, TX2. The transformers are synchronously switched, constant duty ratio (steady state) and high frequency (usually 50kHz or greater).

The primary winding TX1_{P} of transformer TX1 is connected across rail 1 (and its return) and the primary winding TX2_{P} of transformer TX2 is connected across rail 2 (and its return). The secondary windings TX1_{S}, TX2_{S} of the transformers TX1 and TX2 constitute a pair of secondary windings, and are connected together in series to force their currents to be equal. That is to say, the current in winding TX1_{S} must always equal that in TX2_{S}. The resultant loads in rails 1 and 2 (the primary rail loads) are therefore dictated solely by the transformer turns ratios.

If the ratio of TX1 (or TX2ₚ) to TX1_{S} to TX2_{S} is *a:b:c* then the ratio of the loads in rails 1 and 2 will be *b:c.* Moreover, since TX1 is coupled to rail 1 and TX2 is coupled to rail 2, at any point in time TX1_{S} is effectively coupled to the highest instantaneous phase to phase supply voltage, whilst TX2_{S} is effectively coupled to the second highest instantaneous phase to phase supply voltage. Thus, the circuit illustrated in figure 9 continuously sums a component of the highest instantaneous phase to phase voltage of the three-phase supply and a component of the second highest instantaneous phase to phase voltage of the three-phase supply in the ratio *b:c,* to achieve a voltage output equivalent to the diode selected voltage output of the 12-phase line frequency transformer illustrated in figure 4.

However, in contrast to the passive line frequency transformer of figure 4, with the present invention, only two primary windings and two secondary windings are required. This represents a significant simplification of the winding requirements, with a consequent reduction in size, weight and cost.

Moreover, with the present invention, the transformers may be operated in switched mode and at high frequency. The switching frequency may be independent of the input line frequency. This allows the transformer core to be reduced in size by reducing the peak magnetic flux within the core for a given number of primary winding turns. As peak flux is reduced, peak flux density may be maintained by reducing the core cross-sectional area.

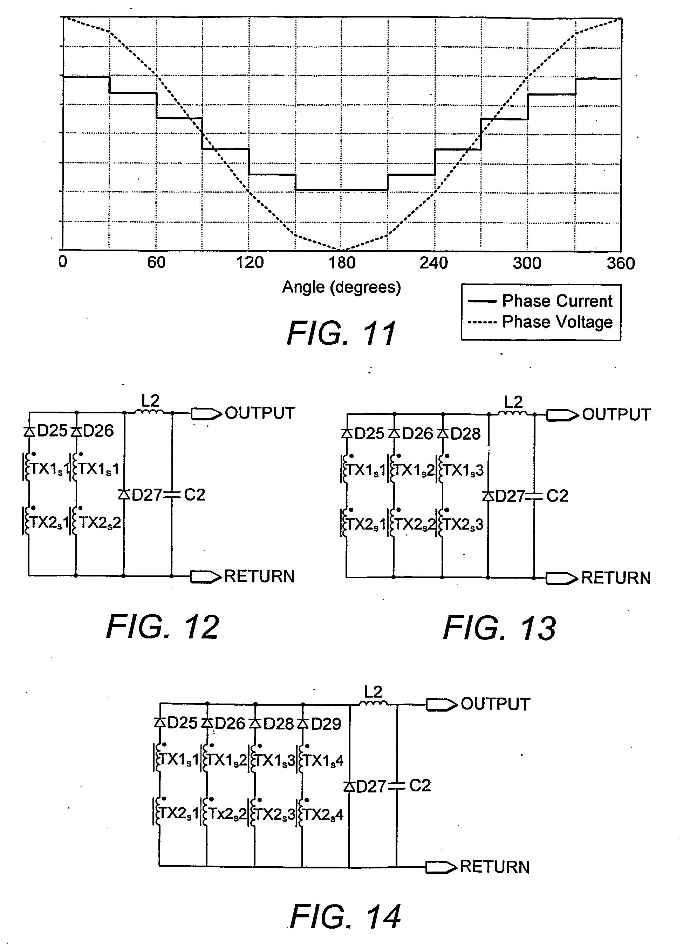

With the circuit shown in figure 9, the ratio *b:c* is selected to correspond to the ideal current ratio of rail 1 to rail 2 at 15, 45, ..., 345 degrees (0.366), which occurs 12 times during each AC cycle. If the current loads are constrained throughout an AC cycle (whilst output current stays constant) then a 12-step current profile will be drawn from each phase. The 12-step voltage and current waveforms (ideal currents averaged over a switching cycle) for this embodiment are illustrated in figure 11. This is an ideal waveform. The current has been filtered to remove the high frequency PWM switching ripple, by filters on the AC input lines.

Figures 12, 13 and 14 illustrate further embodiments of the present invention which respectively enable 24, 36 and 48-step output profiles to be obtained.

In this respect, figures 12, 13 and 14 show alternative secondary-side circuits to the secondary side circuit 13 of the embodiment shown in figure 9. The primary-side circuits for these embodiments (not shown in figures 12, 13 and 14) are identical to the primary side circuit 14 of the embodiment shown in figures 9.

In figure 12, the transformers TX1and TX2 each have two secondary windings TX1_{S}1, TX1_{S}2 and TX2_{S}1, TX2_{S}2. The first secondary windings TX1_{S}1, TX2_{S}1 of each transformer, which constitute a first pair of secondary windings, are connected together in series and have a turns ratio of *d:e*. The second secondary windings TX1_{S}2, TX2_{S}2, which constitute a second pair of secondary windings, are also connected together in series and have a turns ratio of *f:g*. Both pairs are connected in series with a respective diode D25, D26. The series connected windings and diodes are then connected in parallel across the output rail and its return.

In this way, the loads in rails 1 and 2 are constrained at two separate ratios, each of which is repeated 12 times per AC cycle. The output winding pairs (i.e., TX1_{S}1, TX2_{S}1 and TX1_{S}2, TX2_{S}2) are isolated by diodes D25, D26 so that only the pair producing the highest instantaneous voltage will deliver current to the load. In this way a 24-step current profile will be drawn per AC cycle.

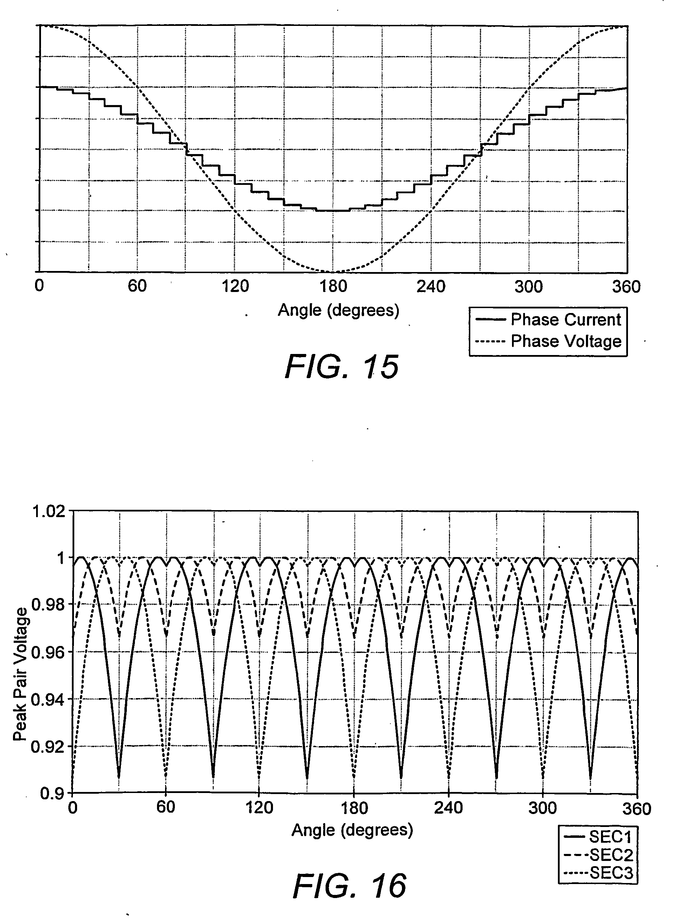

The circuit shown in figure 13 works in precisely the same way, except that an additional pair of output windings TX1_{S}3 and TX2ₛ3 (and an additional diode D28) are provided. In this case, the ratio of the windings are fixed at *a:h:i*, *a:j:k* and *a:l:m.* and correspond respectively to the ideal current ratios of rail 1 to rail 2 which occur at 5, 15 and 25 degrees (each of which is repeated 12 times during the AC cycle) to give a 36-step output current profile. The 36-step voltage and current waveforms (ideal currents averaged over a switching cycle) for this embodiment are illustrated in figure 15. Figure 16 illustrates the normalised voltage amplitudes for the three pairs of secondary windings of the 36-phase embodiment.

The circuit shown in figure 14 has a fourth pair of output windings TX1_{S}4 and TX2ₛ4 (and an additional diode D29) and produces four different ratios to give a 48-step output current profile.

It will be appreciated that the introduction of each additional pair of transformer windings (each additional ratio) adds a further twelve steps to the load profile. The practical limit is likely to be the 48-step profile, produced by four different ratios.

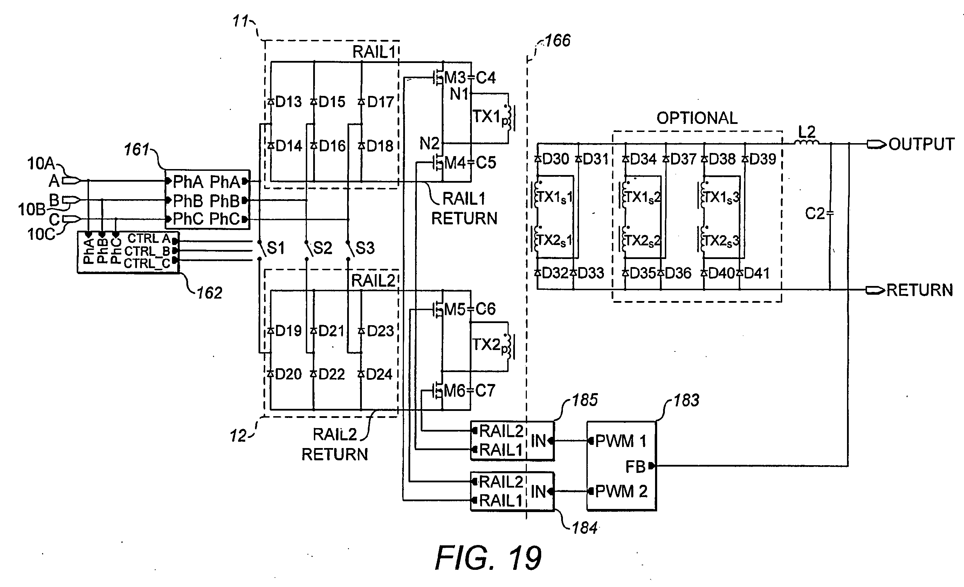

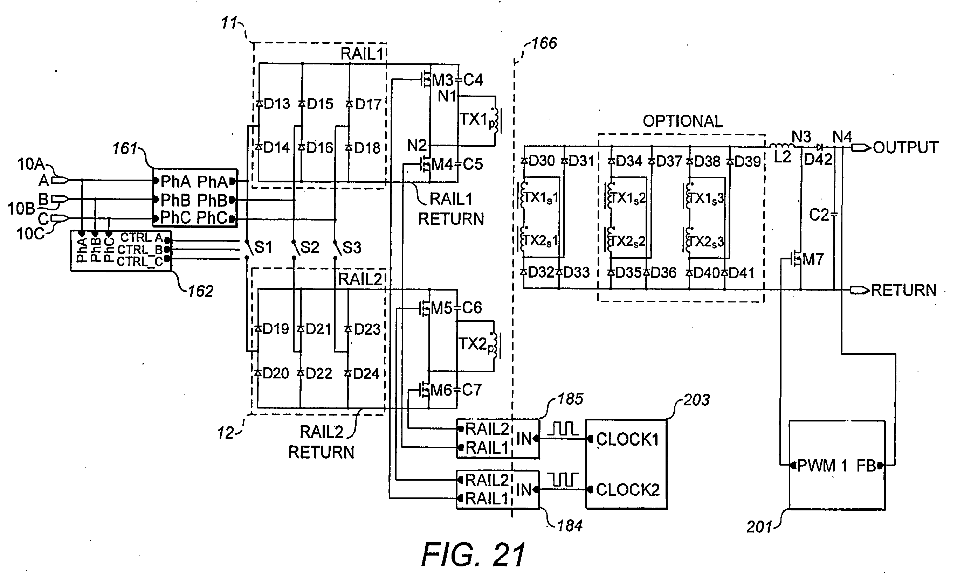

For the purposes of explaining the principles behind the present invention, single ended load converters are illustrated in figures 12 to 14. However, it will be appreciated that the present invention may also be utilized with double ended load converters. For double ended load converters, the secondary circuit will be similar to those illustrated in figures 12 to 14, except that additional diodes will be required, connected in the manner illustrated in figures 19 and 21.

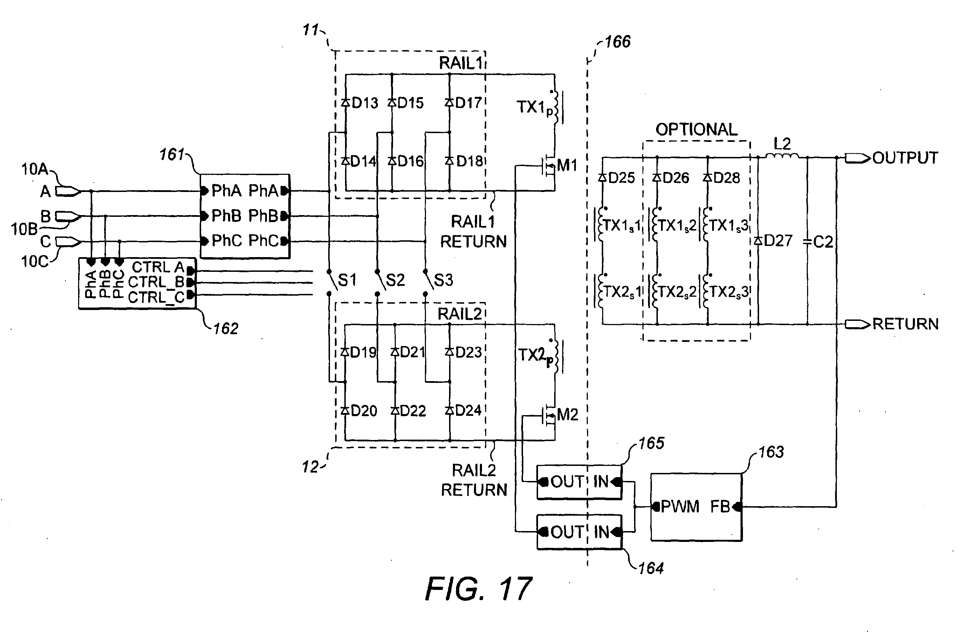

Figures 17 to 21 are circuit diagrams for various power converters which use the circuitry illustrated in figures 9, 12, 13 and 14, and which embody the present invention.

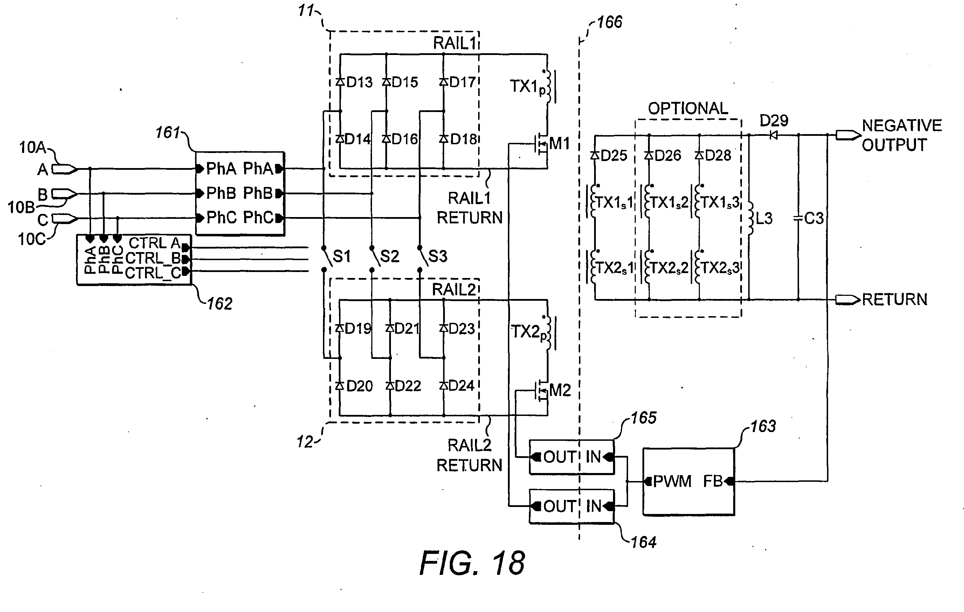

Figures 17 and 18 are single ended load converters which embody the present invention. Figure 17 illustrates a forward converter configuration, whilst figure 18 illustrates a flyback converter configuration.

In both of the circuits illustrated in figures 17 and 18, inputs A, B, C of a three-phase supply (not shown) are connected to respective inputs 10A, 10B, 10C. The inputs 10A, 10B, 10C are connected to respective inputs of an upper harmonic and high frequency filter 161. The respective outputs of the filter are connected to rails 1 and 2 via full wave rectifiers 11 and 12, and switches S1, S2, S3, as described above in relation to figure 9. The switches will normally take the form of back to back FETs controlled by a high side driver. Alternatively, for low frequency input, solid state relays could be used. The inputs 10A, 10B, 10C, are also connected to respective inputs of a switch control circuit 162 which controls switches S 1, S2, S3, to select the second highest of the three available phase to phase supply voltages at any time, as described above in relation to figure 9.

Primary windings TX1_{P}, TX2_{P} of transformers TX1, TX2 are respectively connected across rails 1 and 2, and are coupled to respective secondary windings TX1_{S}1, TX2_{S}1, TX1_{S}2, TX2_{S}2, TX1_{S}3, TX2_{S}3 in the secondary-side circuit. It will be appreciated that although figures 17 to 21 all show three pairs of secondary windings (corresponding to a 36-phase output), one pair, two pairs or four pairs of secondary windings could also be employed depending on the output required.

Diodes D25, D26, D28 isolate the pairs of secondary windings so that only the pair producing the highest instantaneous voltage will deliver current to the load.

The output rail is connected to a switched mode control block 163, which provides a pulse width modulated output to the inputs of two drivers 164, 165, respectively associated with rail 1 and rail 2. The output of each driver is connected to the gate of a respective MOSFET (switch) M 1, M2, connected in series with the primary winding TX1_{P}, TX2_{P} of the respective transformer TX1, TX2.

A galvanic isolation boundary 166 isolates the primary and secondary sides of the circuit.

Figure 19 is a double ended half bridge converter configuration (buck based solution) which embodies the present invention. In this embodiment, both sides of each pair of series connected secondary windings (TX1_{S}1 and TX2_{S}1, TX1_{S}2 and TX2_{S}2, TX1_{S}3 and TX2_{S}3) are connected to both the output rail and its return. Each of these four connections is via a respective diode D30 to D41.

As for figures 17 and 18, the output rail is connected to a switched mode control block 163, which provides a pulse width modulated output to the inputs of two drivers 184, 185. In the circuit of figure 19, each of the drivers 184, 185 has two outputs, one of which is associated with rail 1, and the other of which is associated with rail 2. A pair of MOSFETs M3, M4 are connected in series across rail 1 and its return. A pair of small capacitors C4, C5 are also connected in series across rail 1 and its return. The primary winding TX1_{P} of transformer TX1 is connected between a node N1 between the pair of capacitors C4, C5 and a node N2 between the pair of MOSFETs M3, M4. The primary winding TX2_{P} of transformer TX2 is similarly arranged with respect to MOSFET M5, M6 and small capacitors C6, C7 at rail 2. The rail 1 output of each driver 184, 185 is connected to the gates of MOSFETs M3 and M4 respectively. The rail 2 output of each driver 184, 185 is connected to the gates of MOSFETs M5 and M6 respectively.

Other elements of the circuit of figure 19 are as described for figure 17.

As with all double ended buck based DC to DC topologies, full wave or half wave rectification of the transformer output may be implemented. Half wave rectification requires twice the number of transformer secondary winding pairs.

In the embodiments shown in figures 17, 18 and 19 the output voltage is regulated by adjusting the switching duty cycles of the transformers TX1, TX2. In general, output voltage regulation is applied to buck based topologies such as those shown in figures 17, 18 and 19. However, output voltage regulation may also be applied to other topologies.

If voltage regulation is not required, the transformers TX1, TX2, may be switched with a fixed equal duty cycle, using a clock generator. No PWM (pulse width modulation) is required. Input current harmonic operation is substantially unaffected by the presence or absence of output voltage regulation.

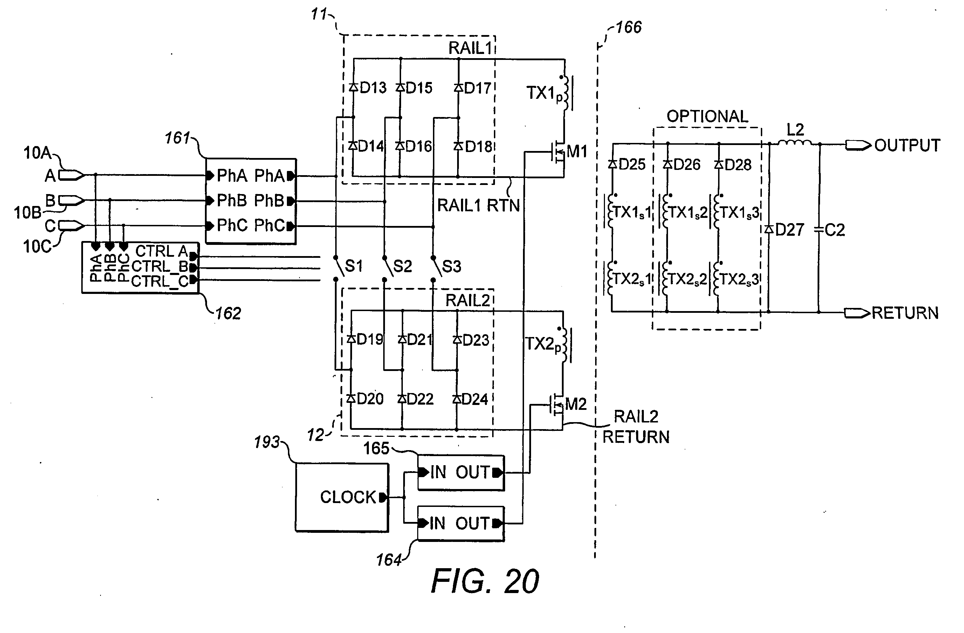

Figure 20 is a circuit diagram for a fixed duty converter, where load regulation is not provided.

The circuit of figure 20 is similar to that of figures 17 and 18, except that the switched mode control block 163 connected to the output rail is omitted. Instead, a clock generator 193 provides an input to the two drivers 164, 165. As for figures 17 and 18, the output of each driver is connected to the gate of a respective MOSFET M1, M2, connected in series with the primary winding TX1_{P}, TX2_{P} of the respective transformer TX1, TX2.

The present invention may also be applied to a boost based load topology, which may be used to draw continuous current from the rails 1 and 2 over a transformer switching cycle (idealised). In order to achieve this, the transformers TX1 and TX2 must be configured in a double ended topology (for example, push pull, bridge or half-bridge) running at as close to 100% duty as possible. A boost converter may then be configured as the secondary side load. The boost switching frequency need not be the same as the transformer switching frequency.

Figure 21 is a circuit diagram for a double ended converter with boost load.

The circuit of figure 21 is similar to that of figure 19. However, the switched mode control block 163 connected to the output rail is omitted and replaced by a clock generator 203, which provides an input to each of the two drivers 184, 185.

In addition, a boost pulse width modulator control block 201 is connected between the output rail and the gate of a MOSFET M7 connected across the output rail and its return. A diode D42 is connected between the nodes N3, N4 at which the MOSFET M7 and the control block 201 are connected to the output rail.

Although the present invention has been described in terms of a device in which the highest and second highest phase to phase voltages of the three-phase supply are selected to provide rails 1 and 2, the device may equally select the highest and lowest phase to phase voltages, or the second highest and the lowest phase to phase voltages to provide rails 1 and 2.

The present invention has been described in terms of a variety of possible topologies. The present invention may equally be applied to other possible topologies. In particular, the secondary load of a power converter embodying the present invention may take the form of, for example, passive resistive loads, inductive loads, and active buck, boost or flyback derived topologies, and resonant, zero voltage switching, or zero current switching versions of the above.

## Claims

1. A power converter for converting a three-phase AC supply (A, B, C) to a DC output, the power converter comprising:-
first selecting means (11) for selecting one of the highest, the second highest or the lowest instantaneous phase to phase voltages of the three-phase supply to provide a first power rail (RAIL 1);
second selecting means (S1, S2, S3, 12) for selecting a different one of the highest, the second highest or the lowest instantaneous phase to phase voltages of the three-phase supply to provide a second power rail (RAIL 2);
first and second transformers (TX1, TX2) coupled to the respective first and second power rails; and
combining means (D25, D27, L2, C2; D25, D29, L3, C3; D30, D31, L2, C2; D30, D31, L2, C2, D42, M7) for combining the outputs of said first and second transformers to provide the DC output.

2. A power converter as claimed in claim 1 wherein the combining means comprises one or more pairs of secondary windings (TX1_{S}, TX2_{S}, TX1_{S}1-4, TX2_{S}1-4), each pair of secondary windings comprising a secondary winding (TX1_{S}, TX1_{S}1-4) of said first transformer (TX1) connected in series with a secondary winding (TX2_{S}, TX2_{S}1-4) of said second transformer (TX2).

3. A power converter as claimed in claim 1 or 2 wherein the turns ratios of the primary and secondary windings of the first and second transformers are selected to yield a phase step of substantially 360°/(12 x N), where N is the number of pairs of secondary windings.

4. A power converter as claimed in any preceding claim wherein the combining means comprises one pair of secondary windings (TX1_{S}, TX2_{S}).

5. A power converter as claimed in claim 2 or 3 wherein the combining means comprises first (TX1_{S}1, TX2_{S}1) and second pairs (TX1_{S}2, TX2_{S}2) of secondary windings.

6. A power converter as claimed in claim 2 or 3 wherein the combining means comprises first (TX1_{S}1, TX2ₛ1), second (TX1_{S}2, TX2_{S}2) and third (TX1_{S}3, TX2_{S}3) pairs of secondary windings.

7. A power converter as claimed in claim 2 or 3 wherein the combining means comprises first (TX1_{S}1, TX2_{S}1), second (TX1_{S}2, TX2_{S}2), third (TX1_{S}3, TX2_{S}3) and fourth (TX1_{S}4, TX2_{S}4) pairs of secondary windings.

8. A power converter as claimed in any one of claims 5 to 7 wherein the power converter further comprises third selecting means (D25, D26, D28, D29) for selecting the highest instantaneous voltage output by the pairs of secondary windings as the DC output.

9. A power converter as claimed in any preceding claim wherein the first selecting means is for selecting the highest instantaneous phase to phase voltage to provide the first power rail and/or wherein the second selecting means is for selecting the second highest instantaneous phase to phase voltage to provide the second power rail.

10. A power converter as claimed in any preceding claim
wherein the first selecting means comprises a full wave rectifier (11) and/or wherein the second selecting means comprises a full wave rectifier (12).

11. A power converter as claimed in any preceding claim
wherein the second selecting means comprises a plurality of switches (S1, S2, S3) for selecting said different one of the highest, the second highest or the lowest instantaneous phase to phase voltages of the three-phase supply and a switch control circuit (162) for controlling said switches.

12. A power converter as claimed in any preceding claim further comprising regulating means for regulating the DC output, and further comprising a switched mode control block (163, 183) for controlling the switching duty cycles of the first and second transformers:

13. A power converter as claimed in any one of claims 1 to 11 further comprising a clock generator (193, 203) for switching the first and second transformers with a fixed equal duty cycle.

14. A power converter as claimed in any preceding claim further comprising a boost pulse width modulator control block (201) configured as the secondary side load.

## Patentansprüche

1. Ein Stromrichter zur Wandlung eine 3-Phasen-Wechselstromzufuhr (A. B, C) in eine GS-Ausgabe, wobei der Stromrichter aus Folgenden besteht: -
einer ersten Wahleinrichtung (11) zur Wahl der höchsten, zweithöchsten und niedrigsten Augenblicksaußenleiterspannung der Dreiphasenzufuhr zur Bereitstellung einer ersten Stromschiene (SCHIENE 1);
einer zweiten Wahleinrichtung (S1, S2, S3, 12) zur Wahl einer anderen höchsten, zweithöchsten oder niedrigsten Augenblicksaußenleiterspannung zur Bereitstellung einer zweiten Stromschiene (SCHIENE 2);
einem ersten und zweiten Stromwandler (TX1, TX2), die jeweils mit der ersten und zweiten Stromschiene verbunden sind; und
einer Kombinierungseinrichtung (D25, D27, L2, C2; D25, D29, L3, C3; D30, D31, L2, C2; D30, D31, L2, C2, D42, M7) zum Kombinieren der Ausgaben der genannten ersten und zweiten Stromwandlers zur Bereitstellung einer GS-Ausgabe.

2. Ein Stromrichter entsprechend Anspruch 1, wobei die Kombinierungseinrichtung eine oder mehrere Sekundärspulenpaare (TX1ₛ, TX2ₛ, TX1ₛ I-4, TX2ₛ1-4) umfasst, wobei jedes Sekundärspulenpaar eine Sekundärspule (TX1ₛ TXIₛI-4) des genannten Stromwandlers (TX1) in Reihenschaltung mit einer Sekundärspule (TX2ₛ TX2ₛ1 -4) des genannten zweiten Stromwandlers (TX2) umfasst.

3. Ein Stromrichter entsprechend Anspruch 1 oder 2, wobei die Windungsverhältnisse der Primär- und Sekundärspulen des ersten und zweiten Stromwandlers so gewählt werden, dass sie einen Phasenschritt von mehr oder 360°/(12 x N) liefern, wobei N die Zahl der Sekundärspulenpaare ist.

4. Ein Stromrichter entsprechend einem der vorangegangenen Ansprüche, wobei die Kombinierungseinrichtung ein Sekundärspulenpaar umfasst (TX1ₛ, TX2ₛ).

5. Ein Stromrichter entsprechend Anspruch 2 oder 3, wobei die Kombinierungseinrichtung erste (TX1ₛ1, TX2ₛ1) und zweite (TX1ₛ2, TX2ₛ2) Sekundärspulenpaare umfasst.

6. Ein Stromrichter entsprechend Anspruch 2 oder 3, wobei die Kombinierungseinrichtung erste (TX1ₛL TX2ₛ1), zweite (TX1ₛ2, TX2ₛ2) und dritte (TX1ₛ3, TX2ₛ3) Sekundärspulenpaare umfasst.

7. Ein Stromrichter entsprechend Anspruch 2 oder 3, wobei die Kombinierungseinrichtung erste (TX1ₛ1, TX2ₛ1), zweite (TX1ₛ2, TX2ₛ2), dritte (TX1ₛ3, TX2ₛ3) und vierte (TX1ₛ4, TX2ₛ4) Sekundärspulenpaare umfasst.

8. Ein Stromrichter entsprechend den Ansprüchen 5 bis 7, wobei der Stromwandler zudem eine dritte Kombinierungseinrichtung (D25, D26, D28, D29) zur Wahl der höchsten Augenblicksspannung durch die Sekundärspulenpaare als GS-Ausgabe umfasst.

9. Ein Stromrichter entsprechend einem der vorangegangenen Ansprüche, wobei die erste Wahleinrichtung zur Wahl der höchsten Augenblicksaußenleiterspannung zur Bereitstellung an die erste Stromschiene und/oder wobei die zweite Wahleinrichtung zur Wahl der zweithöchsten Augenblicksaußenleiterspannung zur Bereitstellung an die zweite Stromschiene gedacht ist.

10. Ein Stromrichter entsprechend einem der vorangegangenen Ansprüche, wobei die erste Wahleinrichtung einen Vollweggleichrichter (11) und/oder die zweite Auswahleinrichtung einen Vollweggleichrichter (12) umfasst.

11. Ein Stromrichter entsprechend einem der vorangegangenen Ansprüche, wobei die zweite Wahleinrichtung eine Reihe von Schaltern (S1, S2, S3) zur Wahl der genannten anderen höchsten, zweithöchsten oder niedrigsten Augenblicksaußenleiterspannung der Dreiphasenzufuhr und einen Umschaltreglungskreis (162) zur Kontrolle der genannten Schalter umfasst.

12. Ein Stromrichter entsprechend einem der vorangegangenen Ansprüche, zudem weiter eine Reglereinrichtung zur Reglung der GS-Ausgabe sowie ein Steuerblock für getaktete Stromversorgung (163, 183) zur Kontrolle der Schaltleistungszyklen der ersten und zweiten Stromwandlers gehören.

13. Ein Stromrichter entsprechend einem der Ansprüche 1 bis 11, zu dem weiter ein Taktgeber (193, 203) zum Schalten des ersten und zweiten Stromwandlers mit einem bestimmten, gleichen Leistungszyklus gehört.

14. Ein Stromrichter entsprechend einem der vorangegangenen Ansprüche, zudem weiter ein Steuerblock für einen Verstärkungspulsbreitenmodular (201), der als Sekundärnebenlast konfiguriert ist, gehört.

## Revendications

1. Convertisseur de puissance pour convertir une alimentation c.a. triphasée (A. B, C) en une sortie c.c., le convertisseur de puissance comprenant :
un premier moyen de sélection (11) pour sélectionner une d'entre la plus haute, la deuxième plus haute ou la plus basse des tensions instantanées de phase à phase de l'alimentation triphasée pour produire un premier rail d'alimentation (RAIL 1) ;
un second moyen de sélection (S1, S2, S3, 12) pour sélectionner une différente d'entre la plus haute, la deuxième plus haute ou la plus basse des tensions instantanées de phase à phase de l'alimentation triphasée pour produire un second rail d'alimentation (RAIL 2) ;
un premier et un second transformateurs (TX1, TX2) couplés au premier et au second rails d'alimentation respectifs ; et
un moyen de combinaison (D25, D27, L2, C2 ; D25, D29, L3, C3 ; D30, D31, L2, C2 ; D30, D31, L2, C2, D42, M7) pour combiner les sorties desdits premier et second transformateurs pour produire la sortie c.c.

2. Convertisseur de puissance selon la revendication 1, dans lequel le moyen de combinaison comprend une ou plusieurs paires d'enroulements secondaires (TX1ₛ, TX2ₛ, TX1ₛ1-4, TX2ₛ1-4), chaque paire d'enroulements secondaire comprenant un enroulement secondaire (TX1ₛ TX1ₛ1-4) dudit premier transformateur (TX1) connecté en série avec une enroulement secondaire (TX2ₛ TX2ₛ1-4) dudit second transformateur (TX2).

3. Convertisseur de puissance selon la revendication 1 ou 2, dans lequel les rapports de rotation des enroulements primaire et secondaire du premier et du second transformateurs sont sélectionnés pour produire un angle de phase faisant sensiblement 360°/(12 x N), où N est le nombre de paires d'enroulements secondaires.

4. Convertisseur de puissance selon l'une quelconque des revendications précédentes, dans lequel le moyen de combinaison comprend une paire d'enroulements secondaires (TX1ₛ, TX2ₛ).

5. Convertisseur de puissance selon la revendication 2 ou 3, dans lequel le moyen de combinaison comprend une première (TX1ₛ1, TX2ₛ1) et une seconde (TX1ₛ2, TX2ₛ2) paires d'enroulements secondaires.

6. Convertisseur de puissance selon la revendication 2 ou 3, dans lequel le moyen de combinaison comprend une première (TX1ₛ1 TX2ₛ1), une seconde (TX1ₛ2, TX2ₛ2) et une troisième (TX1ₛ3, TX2ₛ3) paires d'enroulements secondaires.

7. Convertisseur de puissance selon la revendication 2 ou 3, dans lequel le moyen de combinaison comprend une première (TX1ₛ1, TX2ₛ1), une seconde (TX1ₛ2, TX2ₛ2), une troisième (TX1ₛ3, TX2ₛ3) et une quatrième (TX1ₛ4, TX2ₛ4) paires d'enroulements secondaires.

8. Convertisseur de puissance selon l'une quelconque des revendications 5 à 7, dans lequel le convertisseur de puissance comprend en outre un troisième moyen de sélection (D25, D26, D28, D29) pour sélectionner la plus haute sortie de tension instantanée par la paire d'enroulements secondaires en tant que sortie c.c.

9. Convertisseur de puissance selon l'une quelconque des revendications précédentes, dans lequel le premier moyen de sélection sert à sélectionner la plus haute tension instantanée de phase à phase pour produire le premier rail d'alimentation et/ou dans lequel le second moyen de sélection sert à sélectionner la seconde plus haute des tensions instantanées de phase à phase pour produire le second rail d'alimentation.

10. Convertisseur de puissance selon l'une quelconque des revendications précédentes, dans lequel le premier moyen de sélection comprend un redresseur à deux alternances (11) et/ou dans lequel le second moyen de sélection comprend un redresseur à deux alternances (12).

11. Convertisseur de puissance selon l'une quelconque des revendications précédentes, dans lequel le second moyen de sélection comprend une pluralité de commutateurs (SI, S2, S3) pour sélectionner ladite différente d'entre la plus haute, la deuxième plus haute ou la plus basse des tensions instantanées de phase à phase de l'alimentation triphasée et un circuit de commande de commutateurs (162) pour commander lesdits commutateurs.

12. Convertisseur de puissance selon l'une quelconque des revendications précédentes comprenant en outre un moyen de régulation pour réguler la sortie c.c. et comprenant d'autre part un bloc de commande en mode commuté (163, 183) pour commander les cycles de commutation des premier et second transformateurs.

13. Convertisseur de puissance selon l'une quelconque des revendications 1 à 11 comprenant en outre un générateur d'horloge (193, 203) pour commuter les premier et second transformateurs avec un cycle égal et fixe.

14. Convertisseur de puissance selon l'une quelconque des revendications précédentes comprenant en outre un bloc de commande de modulation de largeurs d'impulsions (201) configuré en tant que charge du côté secondaire.
